# EUROPÄISCHE PATENTSCHRIFT

(11) **EP 2 538 168 B1**
(45) Veröffentlichungstag und Bekanntmachung des Hinweises auf die Patenterteilung: **13.09.2017**
(21) Anmeldenummer: 12172889.3
(22) Anmeldetag: 21.06.2012
(51) Int. Cl.: G01B 3/56

(54) **Messvorrichtung für Biegewerkstücke**
Measuring device for bent workpieces
Dispositif de mesure pour pièces de pliage

(30) Priorität: 24.06.2011 AT 9182011
(43) Veröffentlichungstag der Anmeldung: 26.12.2012
(73) Patentinhaber: Trumpf Maschinen Austria GmbH & CO. KG., 4061 Pasching (AT)
(72) Erfinder: Heller, Burkhard, 4060 Leonding (AT); Sternberg, Andreas, 13088 Berlin (DE)
(74) Vertreter: Burger, Hannes

(56) Entgegenhaltungen:
- FR-A1- 2 277 322
- US-A- 3 269 015

## Beschreibung

Die Erfindung betrifft eine Messvorrichtung zum Vermessen von an einer Abkantpresse gebogenen Werkstücken gemäß dem Oberbegriff von Anspruch 1.

An die Maßhaltigkeit und Formgenauigkeit von an Abkantpressen hergestellten, gebogenen Werkstücken werden ständig höhere Anforderungen gestellt, insbesondere um nachfolgende Bearbeitungsschritte oder Montagevorgänge automatisieren zu können, was durch Maß- und/oder Formungenauigkeiten empfindlich gestört werden kann. Die fertige Länge der Biegeschenkel und der Biegewinkel eines gebogenen Werkstückes hängen dabei unter anderem von den beim Umformvorgang verwendeten Werkzeug-Parametern, den Abmessungen des Ausgangswerkstückes sowie dem Umformverhalten des Werkstückmaterials ab.

Um maßgenaue und formgetreue gebogene Werkstücke zu erhalten, ist es erforderlich, die gestreckte Länge des Ausgangswerkstückes zur möglichst guten Annäherung an Soll-Werte der Biegeschenkellängen am fertig gebogenen Werkstück geeignet zu wählen. Die Genauigkeit des Biegewinkels am gebogenen Werkstück hängt dagegen hauptsächlich von der Eintauchtiefe eines Biegestempels am Biegegesenk ab. Bei modernen Abkantpressen und Biegemaschinen sind dabei für viele gängige Material-Werkzeug-Kombinationen passende Längenausgleichswerte in Datenbanken hinterlegt oder in Tabellen zugänglich oder anhand von Berechnungsformeln näherungsweise ermittelbar, wodurch auf Basis von Soll-Abmessungen des gebogenen Werkstückes und des verwendeten Materials in vielen Fällen die gestreckte Länge des Ausgangswerkstückes mit ausreichender Genauigkeit ermittelt werden kann.

Bei neuen Material-Werkzeug-Kombinationen oder besonders hohen Genauigkeitsanforderungen ist trotzdem häufig noch das Biegen von Probewerkstücken mit anschließender Vermessung der erzielten Biegeschenkellängen und des erzielten Biegewinkels erforderlich. Da das Vermessen der Biegeschenkellängen und des Biegewinkels mit herkömmlichen Werkstatt-Messgeräten in vielen Fällen umständlich und teilweise auch zu ungenau ist, wurden zur Erleichterung der dabei nötigen Messvorgänge bereits verschiedene Messvorrichtungen entwickelt.

So ist beispielsweise aus DE 91 12 094 U1 eine Messvorrichtung bekannt, bei der die Schenkel eines Biegeteiles mit Messschienen angetastet werden und der von den Messschienen eingeschlossene Winkel mittels eines Winkelmessers ablesbar ist. Eine Messung beider Längen der Biegeschenkel eines einfach gebogenen Werkstücks erfordert mit dieser Vorrichtung jedoch zwei Messvorgänge nacheinander, wobei das Werkstück dazwischen gewendet und erneut an der Messvorrichtung positioniert werden muss. Der Zeitaufwand zur vollständigen Vermessung von einfach gebogenen Werkstücken ist dementsprechend hoch.

FR 2 277 322 A1 und US 3 269 015 A beschreiben Messvorrichtungen zur gleichzeitigen Messung eines Winkels und von Längen, und umfassen diese zwei mittels eines Schwenklagers verbundene Messschienen an denen Längenmessvorrichtungen angeordnet sind.

Die Aufgabe besteht darin, eine Messvorrichtung für einfach gebogene, abgewinkelte Werkstücke bereitzustellen, mit der einfach und rasch genaue Messungen der Biegeschenkellängen eines einfach gebogenen Werkstücks durchgeführt werden können.

Die Aufgabe der Erfindung wird durch eine Messvorrichtung mit den Merkmalen des Anspruches 1 gelöst. Durch die Ausführung einer Messvorrichtung mit zwei, den Winkeltastelementen zugeordneten Längenmessvorrichtungen können bei einfach gebogenen Werkstücken mit zwei von einer Biegekante ausgehenden Biegeschenkeln in einem Messvorgang die Abmessungen beider Biegeschenkel vermessen werden, wozu lediglich eine einmalige Einstellung der Messvorrichtung erforderlich ist, und dadurch die Vermessung auf einfache Weise in einem kürzeren Zeitraum und mit geringerem Aufwand durchgeführt werden kann. Da viele Biegeteile lediglich zwei Biegeschenkel aufweisen, kann eine derartige Messvorrichtung in vielen Fällen dazu verwendet werden, ein Biegewerkstück in einem Vorgang vollständig zu vermessen. Insbesondere bei Probewerkstücken, besitzen diese eine einfache Geometrie, das heißt es wird lediglich eine Biegung durchgeführt und anschließend der gebogene Biegeteil vermessen, der lediglich zwei Biegeschenkel aufweist. Da die Längenmessvorrichtungen direkt mit den Winkeltastelementen verbunden sind, also ein Winkeltastelement an einer Längenmessvorrichtung befestigt ist oder umgekehrt, ist sichergestellt, dass die Richtung der Längenmessung mit der Ausrichtung der Biegeschenkel übereinstimmt und dadurch eine genaue Messung der Länge erfolgen kann.

Die Ausführung der Winkeltastelemente mit ebenen Anlageflächen erleichtert dabei durch den flächigen Kontakt die genaue Einstellung der Messvorrichtung an die Geometrie des zu vermessenden Werkstückes, obwohl bei anderen Ausführungsformen auch ein linienartiger oder punktueller Kontakt zwischen den ebenen Biegeschenkeln des Werkstücks und den Ablageflächen möglich ist, z.B. wenn die Messvorrichtung als Handgerät ausgeführt ist und möglichst geringes Gewicht aufweisen soll.

Die Anpassung der Messvorrichtung bzw. der Winkeltastelemente an das Werkstück sollte dabei möglichst einfach und auch so erfolgen können, dass auf das zu vermessende Werkstück keine unnötigen Kräfte, die das Messergebnis verfälschen könnten, ausgeübt werden. Dies ist insbesondere bei Werkstücken aus dünnem Blech von Vorteil. Bei schweren Werkstücken aus dickerem Blech ist hingegen je nach der verwendeten Arbeitsweise eine unterschiedliche Ausführung der Messvorrichtung von Vorteil. Wird die Messvorrichtung an das still stehende, vorpositionierte Werkstück angenähert, ist eine leicht handhabbare Ausführung des Messvorrichtung von Vorteil, also eine Ausführung als Handgerät, während bei einer Messung, in der das Werkstück an die Messvorrichtung angenähert wird, eine möglichst robuste Ausführung der Messvorrichtung wünschenswert ist, also eine Ausführung als Standgerät.

Die Ermittlung der tatsächlichen Biegeschenkellängen nach einem Umformvorgang in Kombination mit der vermessenen tatsächlichen gestreckten Länge des Werkstücks vor dem Umformvorgang ermöglicht für eine bestimmte Kombination aus Ausgangsmaterial und verwendeten Biegewerkzeugen eine Aussage über die tatsächlich auftretende Längenveränderung der neutralen Faser bzw. des Werkstücks und kann dies auch dazu verwendet werden, bestehende Datenbanken für diese Beziehungen zu ergänzen, bereits verwendete Berechnungsformeln zur Ermittlung des Längenausgleichsfaktors auf Eignung zu überprüfen oder empirische Formeln für die Berechnung des Längenausgleichsfaktors neu zu entwickeln. Die erfindungsgemäße Messvorrichtung 1 bildet für die dazu nötigen, teilweise sehr umfangreichen Messungen eine komfortable und zeitsparende Hilfe. Das Messgerät umfasst erfindungsgemäß ein Gestell, das die Winkeltastelemente an voneinander distanzierten Schwenkachsen trägt. Dies ermöglicht ein Ablegen eines Werkstückes auf den Winkeltastelementen um anschließend die Messung durchzuführen. Eine Bedienperson muss das Werkstück oder die Messvorrichtung während der Messung nicht in den Händen halten, wodurch eine muskulöse Belastung durch schwerere Werkstücke während der Messvorgänge vermieden ist. Das Messgerät entspricht in dieser Ausführung einem Standgerät, das beispielsweise bei einer großen Anzahl von durchzuführenden Messungen Vorteile gegenüber einer Ausführung als Handgerät aufweist. Auch in dieser Ausführungsform ist die vorteilhafte gleichzeitige Längenmessung an beiden Biegeschenkeln möglich.
Vorteilhaft ist weiters eine Ausführung gemäß Anspruch 2, wodurch die Längenmessung an den Biegeschenkeln mit einer gleichzeitigen Messung des am Werkstück erzielten Biegewinkels kombiniert werden kann. Diese Ausführungsform erspart die Anwendung zusätzlicher Winkelmessgeräte und verkürzt die für die Vermessung eines Werkstückes erforderliche Zeit. Aus einer einzigen Messung können daher sowohl Rückschlüsse auf den Längenausgleichsfaktor für das Abkanten eines bestimmten Materials mit einer konkreten Werkzeugkombination gezogen werden, als auch Einstellwerte bzw. Korrekturwerte für die Eintauchtiefe eines Biegestempels abgeleitet werden.

Vorteilhaft ist weiters eine Ausführung nach Anspruch 3, wodurch in der Ausführung als Standgerät eine gleichzeitige Messung des erzielten Biegewinkels erfolgen kann und dadurch die Anwendung zusätzlicher Winkelmessgeräte und der damit verbundene Zeitaufwand entfallen.

Durch eine Ausführung gemäß Anspruch 4 kann die Messvorrichtung an unterschiedliche Abmessungen der zu vermessenden Biegewerkstücke angepasst werden. So kann vorzugsweise bei kleinen Biegeschenkellängen und/oder kleinen Biegeradien an der Biegekante ein geringer Abstand eingestellt werden, während bei großen Biegeschenkellängen und/oder Biegeradien ein größerer Abstand zwischen den Schwenkachsen und dadurch auch zwischen den daran befestigten Winkeltastelementen gewählt werden kann.

Eine Ausführung nach Anspruch 5 erlaubt eine komfortable Durchführung von Messungen, da ein zu vermessendes Werkstück einfach auf den Anlageflächen der Winkeltastelemente aufgelegt wird, und dadurch die Hände einer Bedienperson für die weitere Durchführung der Messung frei sind. Durch die flächigen Anlageflächen können darüber hinaus auch sehr genaue Messungen durchgeführt werden.
Durch eine Ausbildung der Messvorrichtung gemäß Anspruch 6 können die beiden Schwenkachsen relativ nahe zueinander angeordnet werden, und ragen von diesen die größeren Abschnitte der Winkeltastelemente flügelartig nach außen. Durch die Verwendung von Ausgleichsgewichten, mit denen der Schwerpunkt in die Nähe der Schwenkachsen verlagert wird, sind die Winkeltastelemente weitgehend ausbalanciert und legen sich diese allein aufgrund des Eigengewichts des Werkstücks gut an die Biegeschenkel an, ohne dass dazu größere Betätigungskräfte nötig wären, die die Messergebnisse beeinflussen könnten.

Die Abmessungen der Winkeltastelemente gemäß Anspruch 7 ergeben handliche Abmessungen der Messvorrichtung und ist zur Vermessung sowohl von kleinen als auch größeren Werkstücken gut geeignet.

Mit einer Ausführung nach Anspruch 8, werden die Längenmessvorrichtungen beim Anlegen der zu vermessenden Werkstücke an die Anlageflächen automatisch in die richtige Position zur Vermessung der Biegeschenkellängen verbracht. Eine Durchführung der Längenmessung mit pneumatischer Antastung ist für den Benutzer komfortabel und ergibt zusätzlich gleich bleibende Messkräfte, wodurch die Vergleichbarkeit von Messergebnissen verbessert wird.

Eine Bewegungsdämpfung des Schwenklagers gemäß Anspruch 9 vermeidet Verfälschungen der Messergebnisse durch zufällige und unkontrollierte Winkelveränderungen zwischen den Winkeltastelementen. Die Bewegungsdämpfung kann dabei durch eine definierte Vorspannkraft zwischen relativ zueinander bewegten Bestandteilen des Schwenklagers bzw. der Schwenkachsen hergestellt werden. Auch die Verwendung spezieller Dämpfungselemente kann vorgesehen sein, ebenso kann ein mit einer Schwenkachse verbundener Drehgeber eine bewegungsdämpfende Wirkung aufweisen.

Eine Ausführung der Messvorrichtung gemäß Anspruch 10 ist von Vorteil, da die Referenzpunkte der Längenmessvorrichtungen und einer gegebenenfalls vorhandenen Winkelmesseinrichtung mithilfe von Kalibrierwerkstücken sehr exakt gesetzt werden können, und Toleranzen der Bestandteile der Messvorrichtung und Ungenauigkeiten beim Zusammenbau der Messvorrichtung dadurch nicht wirksam werden.

Die Ausbildung nach Anspruch 11 ermöglicht es auf einfache Weise, basierend auf durchgeführten Messungen von Werkstücken den für die Vorbereitung der ungebogenen Ausgangswerkstücke erforderlichen Längenausgleichsfaktor zu ermitteln. In der Recheneinheit mit der Programmlogik können in Speicherelementen die Berechnungsvorschriften für die Ermittlung des Faktors implementiert sein. Weiters kann damit auch eine evtl. erforderliche Korrektur der Eintauchtiefe eines Biegestempels mithilfe der Recheneinheit errechnet werden.

Eine Schnittstelle gemäß Anspruch 12 ermöglicht die einfache Verbindung der Messvorrichtung mit der Steuerung einer Biegepresse oder Abkantpresse, wobei mögliche Übertragungsfehler durch Fehlbedienung durch den Benutzer vermieden werden. In diesem Fall können die Messwerte einer Recheneinheit der Steuerung zugeführt werden, in der die Ermittlung von Längenausgleichsfaktor und Eintauchtiefenkorrektur des Biegestempels erfolgen kann.

Mit einer Messvorrichtung nach Anspruch 13 können auch ungebogene Ausgangswerkstücke vermessen werden, wodurch die Verwendung zusätzlicher Messmittel entfällt und mit der erfindungsgemäßen Messvorrichtung die wichtigsten, zur Beurteilung des Umformverhaltens erforderlichen Messungen durchgeführt werden können.

Da das Umformverhalten eines Werkstückes auch stark von der Dicke des Ausgangsmaterials abhängig ist, ist weiters eine Ausbildung gemäß Anspruch 14 möglich, wonach mit der erfindungsgemäßen Messvorrichtung zusätzlich auch die Dicke der Biegeschenkel vermessen werden kann..

Zum besseren Verständnis der Erfindung wird diese anhand der nachfolgenden Figuren näher erläutert.

Es zeigen jeweils in stark schematisch vereinfachter Darstellung:
- Fig. 1: eine Ansicht einer dem Verständnis der Erfindung dienenden, jedoch nicht erfindungsgemäßen Messvorrichtung zur Vermessung der Biegeschenkellängen;
- Fig. 2: eine Ansicht einer Messvorrichtung ohne Winkelmesseinrichtung in einer dem Verständnis der Erfindung dienenden, jedoch nicht erfindungsgemäßen Ausführung als Handgerät beim Vermessen eines Werkstücks mittlerer Dicke;
- Fig. 3: eine Ansicht einer weiteren Ausführungsform einer Messvorrichtung mit Winkelmesseinrichtung in einer dem Verständnis der Erfindung dienenden, jedoch nicht erfindungsgemäßen Ausführung als Handgerät beim Vermessen eines Werkstücks mit geringer Dicke und stumpfem Biegewinkel;
- Fig. 4: eine Ansicht einer dem Verständnis der Erfindung dienenden, jedoch nicht erfindungsgemäßen Messvorrichtung gemäß Fig. 3 beim Vermessen eines Werkstücks mit geringer Dicke und spitzem Biegewinkel;
- Fig. 5: eine Ansicht einer Ausführungsform einer erfindungsgemäßen Messvorrichtung mit Winkelmesseinrichtung in Ausführung als Standgerät;
- Fig. 6: eine Ansicht der Messvorrichtung gemäß Fig. 5 beim Vermessen eines rechtwinkelig gebogenen Werkstückes mittlerer Dicke.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

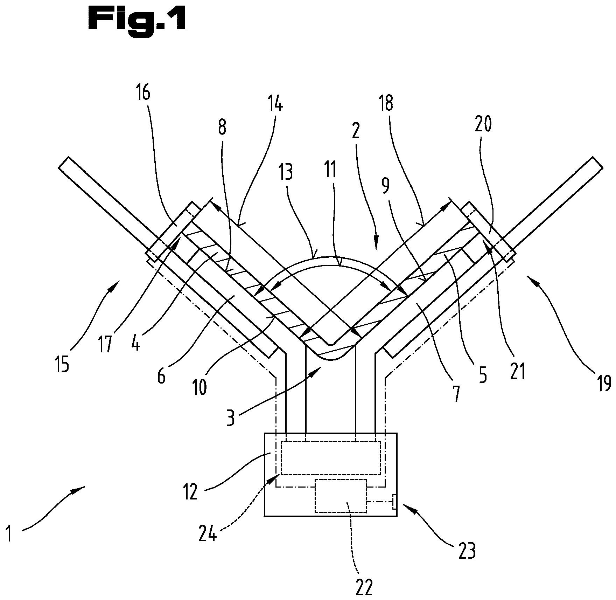

Fig. 1 zeigt eine gattungsgemäße dem Verständnis der Erfindung dienende, jedoch nicht erfindungsgemäße Messvorrichtung 1 zum Vermessen eines an einer Abkantpresse gebogenen Werkstückes 2. Das Werkstück 2 umfasst dabei einen von der Biegekante 3 ausgehenden ersten Biegeschenkel 4 sowie einen von der Biegekante 3 ausgehenden zweiten Biegeschenkel 5. Viele gebogene Werkstücke 2 besitzen eine solche einfache Form, insbesondere können Probewerkstücke, die zur Feststellung des Umformverhaltens eines neuen Materials gebogen werden, lediglich zwei gerade Biegeschenkel 4, 5 aufweisen. Zur Vermessung der Längen der Biegeschenkel 4, 5 werden an diese Winkeltastelemente 6 und 7 angelegt. Die Winkeltastelemente 6 und 7 besitzen dazu Anlageflächen 8 und 9, die beidseits der Biegekante 3 im Bereich der Biegeschenkel 4, 5 an die Außenseite 10 des Werkstückes 2 angelegt werden bzw. zwischen denen die Biegekante 3 positioniert wird, für den Fall, dass das Werkstück 2 an die Messvorrichtung 1 angenähert wird.

Da der Biegewinkel 11 der zu vermessenden Werkstücke 2 variieren kann, sind die beiden Winkeltastelemente 6 und 7 mittels einer Schwenkanordnung 12 in ihrer Winkelstellung relativ zueinander verschwenkbar gelagert. Bei am Werkstück 2 anliegenden Anlageflächen 8, 9 entspricht der zwischen diesen eingeschlossene Winkel 13 mit ausreichender Genauigkeit dem Biegewinkel 11 am Werkstück 2. Der einstellbare Bereich für den Winkel 13 ist von der Ausführung und Art der Schwenkanordnung 12 abhängig, es ist jedoch von Vorteil, wenn ein möglichst großer Bereich für den Winkel 13 abgedeckt wird. Damit auch ungebogene Werkstücke 2 vermessen werden können, ist es von Vorteil, wenn der Winkel 13 bis zumindest 180° betragen kann, und dadurch zuerst die gestreckte Länge des Ausgangswerkstückes gemessen und nach dem Biegevorgang die Längen der Biegeschenkel 4, 5 des gebogenen Werkstückes 2 gleichzeitig vermessen werden können. Die Schwenkanordnung 12 kann dabei eine sehr einfache Kinematik aufweisen, jedoch ist auch der Einsatz mehrgliedriger kinematischer Mechanismen möglich, die je nach Anforderung eine optimale Einstellbarkeit der Winkeltastelemente 6, 7 ermöglichen.

Der in Fig. 1 links dargestellte Biegeschenkel 4 besitzt eine Biegeschenkellänge 14, die unter Verwendung einer ersten Längenmessvorrichtung 15 vermessen wird. Diese ist dem linken Winkeltastelement 6 zugeordnet und umfasst ein verstellbares Längentastelement 16, dass zur Messung in Kontakt mit dem linken Ende 17 des linken Biegeschenkels 4 gebracht wird. Zur Vermessung der Biegeschenkellänge 18 des rechten Biegeschenkels 5 ist dem rechten Winkeltastelement 7 eine zweite Längenmessvorrichtung 19 zugeordnet, die ebenfalls ein verstellbares Längentastelement 20 umfasst, das zur Messung in Kontakt mit dem Ende 21 des rechten Biegeschenkel 5 gebracht wird.
Die Längenmessvorrichtungen 15, 19 benutzen vorzugsweise Messprinzipien wie digitale Messschieber, wobei auf bewährte Technologien und Bauteile zurückgegriffen werden kann. Die Verschiebung der Längentastelemente 16, 20 wird von einer Auswerteelektronik mit einer Recheneinheit 22 erfasst und können die Messergebnisse zusätzlich über eine Schnittstelle 23 an eine Maschinensteuerung der Abkantpresse übergeben werden.

Vorzugsweise umfasst die Schwenkanordnung 12 weiters eine Winkelmesseinrichtung 24, mit der der Winkel 13 zwischen den Anlageflächen 8, 9 der Winkeltastelemente 6, 7 erfasst werden kann. Die Winkelmesseinrichtung 24 kann ebenso ein elektrisches Messprinzip benutzen und können auch die damit erfassten Winkel 13 von der Recheneinheit 22 ausgewertet und optional über eine Schnittstelle 23 ausgegeben werden. Anhand des gemessenen Winkels 13, der dem erzielten Biegewinkel 11 eines gebogenen Werkstückes 2 entspricht, erhält man weitere Informationen über das Umformverhalten des Materials und kann eine nötigenfalls erforderliche Korrektur der Eintauchtiefe eines Biegestempels in das Biegegesenk ermittelt bzw. vorgenommen werden, falls der tatsächliche Biegewinkel 11 von einem Sollwinkel abweicht.

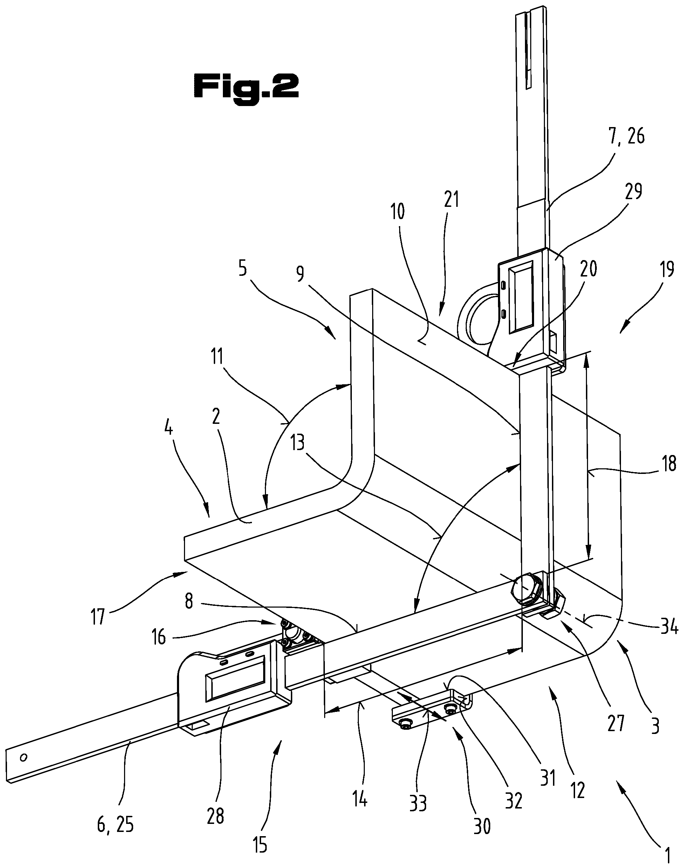

Fig. 2 zeigt eine weitere dem Verständnis der Erfindung dienende, jedoch nicht erfindungsgemäße Ausführungsform einer Messvorrichtung 1 wobei wiederum für gleiche Teile gleiche Bezugszeichen wie in Fig. 1 verwendet wurden. Um unnötige Wiederholungen zu vermeiden, wird auf die detaillierte Beschreibung in den vorangegangenen Fig. 1 hingewiesen bzw. Bezug genommen. Bei der Ausführung nach Fig. 2 sind die beiden Winkeltastelemente 6, 7 durch zwei Messschienen 25, 26 gebildet, die an einem Schwenklager 27 miteinander verbunden sind und zur Messung eines Werkstückes 2 wie eine Schmiege an die beiden Biegeschenkel 4, 5 angelegt werden und die Biegekante 3 an das Schwenklager 27 angenähert wird. Die Schwenkanordnung 12 besteht in diesem Ausführungsbeispiel also im Wesentlichen aus dem Schwenklager 27. Auf den beiden Messschienen 25, 26 sind Messschlitten 28, 29 verschieblich gelagert, die die Längentastelemente 16, 20 zur Messung der Biegeschenkellängen 14, 18 aufweisen. Zur Messung werden die Messschlitten 28, 29 entlang der Messschienen 25, 26 in Richtung zum Schwenklager 27 verschoben, bis die Längentastelemente 16, 20 die Enden 17 und 21 der beiden Biegeschenkel 4, 5 kontaktieren.

Das Schwenklager 27 kann z.B. so aufgebaut sein, dass auf einer Kopfschraube eine Abfolge aus einer Lagerscheibe bzw. Lagerbuchse, der ersten Messschiene 25, einer zweiten Lagerscheibe bzw. Lagerbuchse, der zweiten Messschiene 26, einer Druckhülse oder Druckscheibe, zweier gegensinniger Tellerfedern, einer Spannmutter und einer Kontermutter montiert ist. Durch das Anziehmoment der Spannmutter kann der Bewegungswiderstand und damit auch die Bewegungsdämpfung des Schwenklagers 27 feinfühlig eingestellt werden.

Die Messschienen 25, 26 besitzen vorzugsweise einen Querschnitt mit einer Breite zwischen 12 mm und 25 mm sowie einer Dicke zwischen 3 mm und 6 mm, wodurch ein guter Kompromiss zwischen ausreichender Steifigkeit und Stabilität für ausreichende Messgenauigkeit sowie geringem Gewicht für gute Handhabbarkeit gegeben ist.

Zur Durchführung einer Messung kann das Werkstück 2 mit einem ersten Biegeschenkel 4 auf einer etwa horizontal gehaltenen Messschiene 25 aufgelegt werden und wird der zugehörige Messschlitten 28 mit seinem Längentastelement 16 bis zum Kontakt mit dem Ende 17 des ersten Biegeschenkel 4 angenähert. Anschließend wird die andere Messschiene 26 flächig an den zweiten Biegeschenkel 5 angelegt und der zugehörige Messschlitten 29 angenähert, bis dessen Längentastelement 20 das Ende 21 des zweiten Biegeschenkels 5 kontaktiert. Bei digitalen Messschlitten 28, 29 werden diese vor Beginn der Messung aktiviert und bei einem Relativmesssystem eine Referenzlage angefahren, in der Referenzpunkte gesetzt werden, z.B. indem ein Referenz-Werkstück mit bekannten Abmessungen vermessen wird und in diesen Messpunkten eine Nullstellung der Messwerte durchgeführt wird.

Um die Messung bei dieser Ausführungsform eines Messgeräts 1 zu erleichtern, kann eine Längenmessvorrichtung 15 ein mit dem verfahrbaren Messschlitten 28 oder Längentastelement 16 verbundenes und von der Messschiene 25 distanziertes Stützelement 30 aufweisen, das zusätzlich zur Messschiene 25 das zu vermessende Werkstück 2 stützt. Das Stützelement 30 weist dazu eine in der Ebene der zugehörigen Anlagefläche 8 liegende Stützfläche 31 und eine dazu rechtwinkelige und zur Messschiene 25 parallele Anschlagfläche 32 auf, wodurch zwischen Messvorrichtung 1 und Werkstück 2 eine definierte Lagebeziehung hergestellt wird und an gleich großen Werkstücken 2 die Messung jeweils an derselben Position erfolgt und Messergebnisse dadurch besser vergleichbar sind. Das Stützelement 30 hilft das Werkstück 2 während der Messung zu stabilisieren, und wird für die Bedienperson die Betätigung der Messschlitten 28, 29 erleichtert.

Um das Stützelement 30 bei verschiedenen Werkstückabmessungen einsetzen zu können, ist es vorzugsweise gemäß Doppelpfeil 33 quer zur Richtung der Messschiene 25 verstellbar und in verschiedenen Positionen fixierbar.

Das Schwenklager 27 ist vorteilhafterweise bewegungsgedämpft ausgeführt und erfordert deshalb eine Verstellung der Winkeltastelemente 6, 7, hier in Form der Messschienen 25, 26 ein spürbares Drehmoment, wodurch ein stabiler Kontakt zwischen Werkstück 2 und den Messschienen 25, 26 hergestellt und während der Messung aufrechterhalten werden kann. Das Schwenklager 27 bildet eine Schwenkachse 34 für die Relativverstellung der Winkeltastelemente 6,7, hier in Form von Messschienen 25, 26, könnte aber auch bei einer Messvorrichtung gemäß Fig. 1 realisiert sein, bei denen die Winkeltastelemente 6, 7 nicht als Messschienen ausgeführt sind.

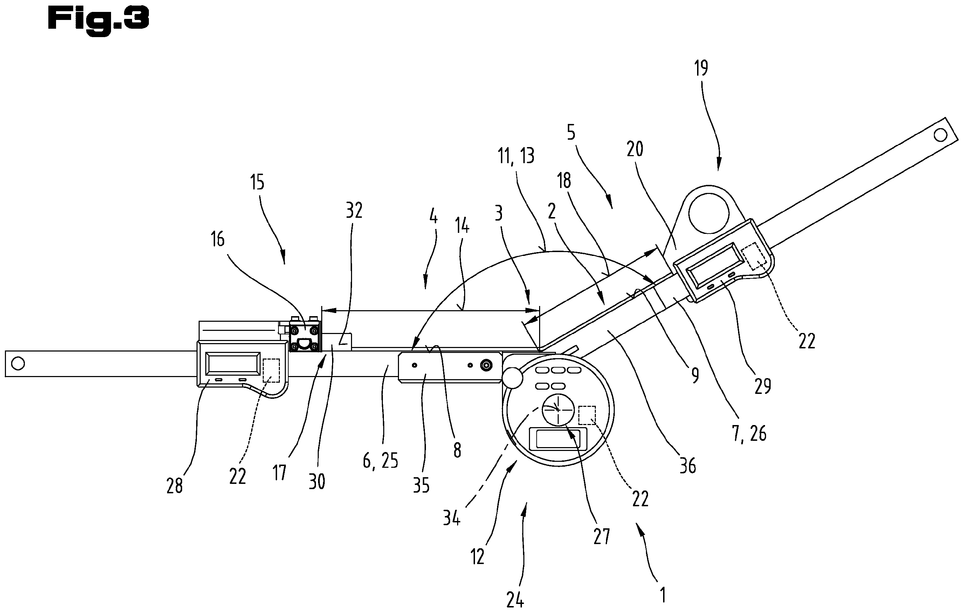

In der Fig. 3 ist eine weitere dem Verständnis der Erfindung dienende, jedoch nicht erfindungsgemäße Ausführungsform der Messvorrichtung 1 gezeigt, wobei wiederum für gleiche Teile gleiche Bezugszeichen bzw. Bauteilbezeichnungen wie in den vorangegangenen Fig. 1 bzw. 2 verwendet werden. Um unnötige Wiederholungen zu vermeiden, wird auf die detaillierte Beschreibung in den vorangegangenen Fig. 1 und 2 hingewiesen bzw. Bezug genommen. Die Messvorrichtung 1 gemäß Fig. 3 ist ähnlich aufgebaut wie jene in Fig. 2 mit Winkeltastelementen 6, 7 in Form von Messschienen 25 und 26, auf denen verstellbare Messschlitten 28, 29 mit Längentastelementen 16 und 20 verstellbar angeordnet sind. Die Schwenkanordnung 12 ist in diesem Ausführungsbeispiel durch eine Winkelmesseinrichtung 24 gebildet, die ein eine Schwenkachse 34 ausbildendes Schwenklager 27 umfasst. Die auch hier als Winkeltastelemente 6,7 fungierenden Messschienen 25, 26 sind hier an Winkelmessarmen 35 und 36 der Winkelmesseinrichtung 24 befestigt, die um die Schwenkachs 34 relativ zueinander verschwenkbar sind. Die Winkelmesseinrichtung 24 basiert vorzugsweise auch auf einem elektrischen Messprinzip, wie es bei digitalen Werkstattwinkelmessern verwendet wird und können optional an einem Werkstück 2 erfasste Messwerte auch über eine Schnittstelle zur weiteren Auswertung oder zur Verwendung mit der Steuerung einer Abkantpresse ausgegeben werden.

Die Messvorrichtung 1 gemäß Fig. 3 ermöglicht neben der gleichzeitigen Messung der Biegeschenkellängen 14 und 18 auch eine gleichzeitige Messung des Winkels 13 zwischen den Anlageflächen 8 und 9, der mit ausreichender Genauigkeit dem erzielten Biegewinkel 11 an einem gebogenen Werkstück 2 entspricht. Auch in dieser Ausführungsform kann die Messung durch ein von der Messschiene 25 distanziertes Stützelement 30 erleichtert werden, indem ein Werkstück 2 neben der Messschiene 25 zusätzlich auch von einem Stützelement 30 abgestützt werden kann.

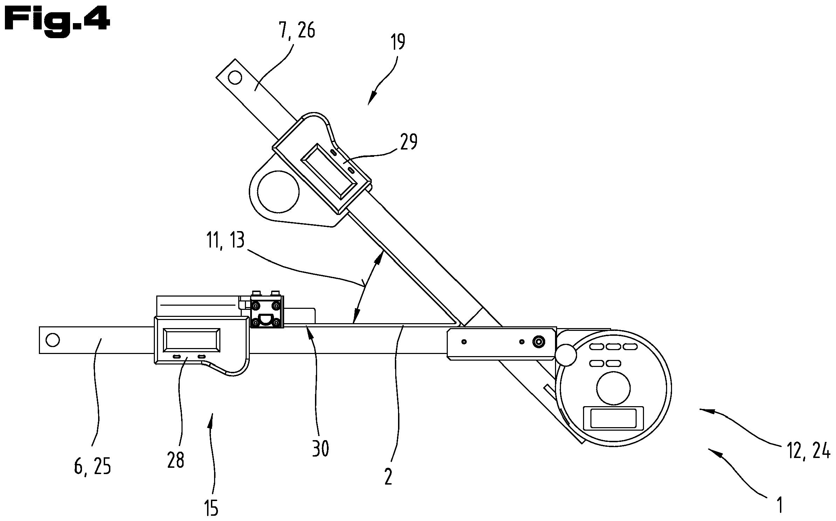

Fig. 4 zeigt die dem Verständnis der Erfindung dienende, jedoch nicht erfindungsgemäße Messvorrichtung gemäß Fig. 3 bei der Vermessung eines Werkstückes 2 mit einem spitzen Biegewinkel 13 von etwa 45°. Bei der Ausführung gemäß Fig. 2 oder Fig. 3 ist eine Messung auch von ungebogenen Werkstücken möglich, da die Messschienen 25, 26 in eine gestreckte Lage verstellbar sind und die Längenmessvorrichtungen 15, 19 auch in dieser Lage verwendet werden können.

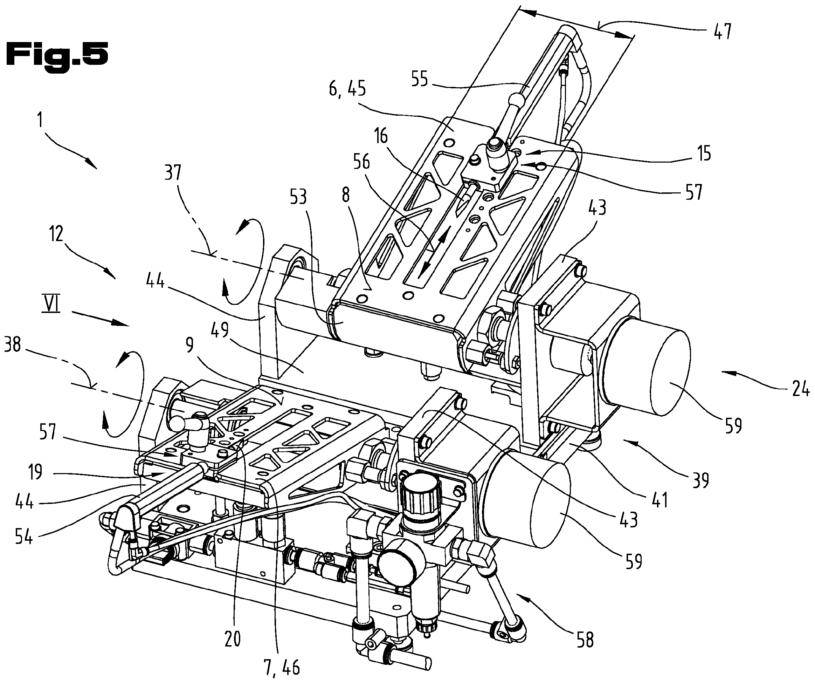

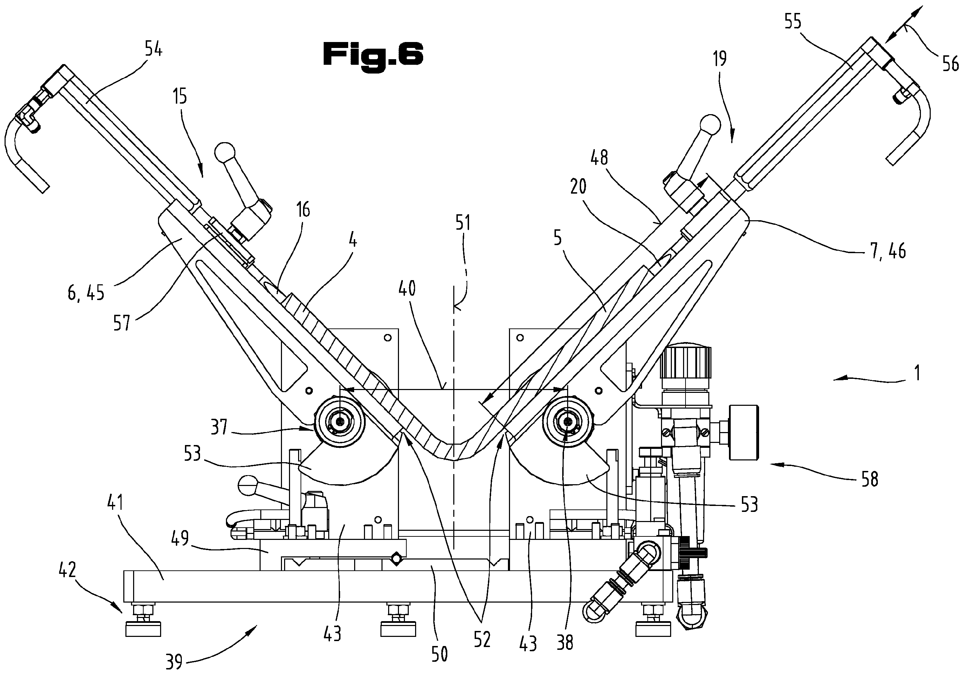

In Fig. 5 ist in Schrägansicht eine erfindungsgemäße Ausführungsform der Messvorrichtung 1 als Standgerät gezeigt, wobei auch diese die gleichzeitige Vermessung beider Biegeschenkellängen 14 und 18 eines gebogenen Werkstücks 2 ermöglicht. Fig. 6 zeigt diese Messvorrichtung 1 in einer Schnittdarstellung betrachtet aus Richtung VI in Fig. 5 während eines Messvorgangs und bezieht sich die folgende Beschreibung auf Fig. 5 und Fig. 6.

In dieser Ausführungsform umfasst die Schwenkanordnung 12 zwei voneinander distanzierte, zueinander parallele Schwenkachsen 37 und 38 an einem Gestell 39, um die die Winkeltastelemente 6, 7 relativ zum Gestell 39 verschwenkbar sind. Die Schwenkachsen 37, 38 besitzen zueinander einen Achsabstand 40, wobei die Schwenkachsen Gebrauchslage der Messvorrichtung 1 vorzugsweise in horizontaler Richtung verlaufen und auch in horizontaler Richtung voneinander beabstandet sind.

Das Gestell umfasst eine Grundplatte 41, vorzugsweise mit in der Höhe anpassbaren Stellfüßen 42, von der zwei oder vier voneinander distanzierte und die beiden Schwenkachsen 37, 38 tragende Seitenwangen 43 und 44 aufragen. Die Schwenkachsen 37, 38 sind in den Seitenwangen 43, 44 drehbar gelagert und tragen die Winkeltastelemente 6, 7, die hier als flächige Auflagen 45, 46 ausgeführt sind und nach oben weisende Anlageflächen 8, 9 aufweisen, auf denen ein zu vermessendes Werkstück 2 abgelegt werden kann, wobei die Biegekante 3 zwischen den Schwenkachsen 37, 38 zu liegen kommt. An den Auflagen 45, 46 sind die Längenmessvorrichtungen 15, 19 angeordnet und können mit diesen beide Biegeschenkellängen 14, 18 eines zu vermessenden Werkstücks 2 gleichzeitig vermessen werden.
Die Anlageflächen 8, 9 der Auflagen 45, 46 besitzen eine parallel zu den Schwenkachsen 37, 38 gemessene Breite 47, die insbesondere zumindest 60 mm, vorzugsweise zumindest 80 mm beträgt. Zum Auflegen der Biegeschenkel 4, 5 besitzen die Anlageflächen 8, 9 eine Auflagelänge 48, die insbesondere zumindest 80 mm, vorzugsweise zumindest 120 mm beträgt. Die tatsächlich verfügbare Auflagelänge 48 kann jedoch durch die Längenmessvorrichtungen 15, 19 reduziert sein.

Der Achsabstand 40 ist in der dargestellten Variante der Messvorrichtung 1 verstellbar. Dazu sind beispielsweise die in Fig. 6 linken Seitenwangen 43, 44, die die linke Schwenkachse 37 tragen auf einer Bodenplatte 49 befestigt, die relativ zur Grundplatte 41 in horizontaler Richtung verstellbar und an verschiedenen Positionen fixierbar ist. Vorzugsweise kann die Bodenplatte 49 an der Grundplatte 41 selbst oder mittels einer Rasterplatte 50 mit Rastausnehmungen, wie in Fig. 6 dargestellt, in definierten Positionen festgelegt werden. In Fig. 6 ist die Bodenplatte 49 in einer mittleren von drei Positionen fixiert, wodurch ein mittlerer Achsabstand 40 gegeben ist, der bei Bedarf zum Beispiel für größere Werkstücke 2 vergrößert oder für kleinere Werkstücke verkleinert werden kann, wodurch die Messvorrichtung für ein großes Teilespektrum geeignet ist.

Die Winkeltastelemente 6, 7, hier in Form von Auflagen 45 und 46 mit den daran angeordneten Längenmessvorrichtungen 15, 19 sind bevorzugt im Wesentlichen baugleich und symmetrisch bezüglich einer zwischen den Schwenkachsen 37 und 38 liegenden Bezugsebene 51 angeordnet.

Die Schwenkachsen 37, 38 sind an den Winkeltastelementen 6, 7 vorteilhafterweise in der Nähe der zur Bezugsebene 51 näherliegenden Vorderkante 52 der Anlageflächen 8, 9 angeordnet, vorzugsweise innerhalb des vorderen Viertels der Auflagelänge 48, wodurch die Vorderkanten 52 der Winkeltastelemente 6, 7 mit den Schwenkachsen 8, 9 zur Vermessung kleiner Werkstücke 2 relativ nahe zueinander positioniert werden können. Die Abmessungen können insbesondere so gewählt sein, dass die Vorderkanten 52 in gestreckter Lage der Winkeltastelemente 6, 7, also bei einem Winkel 13 von 180° beinahe an die Bezugsebene 51 angrenzen.

Die Auflagen 45, 46 oder die Schwenkachsen 37, 38 können mit Ausgleichsgewichten 53 versehen sein, wodurch der gemeinsame Schwerpunkt einer Auflage 45, 46 mit dem zugehörigen Ausgleichsgewicht 53 in die Nähe der Schwenkachse 37, 38 positioniert wird. Die dermaßen statisch ausgewuchteten Auflagen 45, 46 können sich dadurch schon bei sehr geringer Krafteinwirkung, z.B. durch das Eigengewicht des zu vermessenden Werkstücks 2 optimal an die Biegeschenkel 4, 5 anpassen und wird dadurch das Werkstück 2 stabil unterstützt und für die Messung der Biegeschenkellängen 14, 18 positioniert.

Die Längenmessvorrichtungen 15, 19 umfassen wieder Längenmesstastelemente 16, 20 mit denen die Enden 17, 21 der Biegeschenkel 4, 5 angetastet werden. Dieses Antasten kann manuell erfolgen, wie auch bei den Ausführungen gemäß den Fig. 1 - 3, es sind, wie in Fig. 5 und Fig. 6 dargestellt auch pneumatische Längenmesstaster 54, 55 möglich, durch die die Längentastelemente 16, 20 mittels Druckluft in Messrichtung 56 verstellbar sind. Das feststehende Gehäuse der Längenmesstaster 54, 55 ist in Halterungen 57 befestigt, die in Messrichtung 56 in verschiedenen Positionen an den Auflagen 45, 46 fixierbar sein können.

Die Druckluftversorgung der Längenmesstaster 54, 55 kann über eine eigene, an der Messvorrichtung 1 vorgesehene Druckluft-Wartungseinheit 58 erfolgen, wobei auch eine exakte

Druckregelung möglich ist, um die Messkraft für die Längenmessung einstellen zu können und konstant zu halten.

Neben den Längenmessvorrichtungen 15, 19 umfasst die Messvorrichtung 1 in diesem Ausführungsbeispiel ebenfalls eine Winkelmesseinrichtung 24, mit der auch der erzielte Biegewinkel 11 eines Werkstückes 2 gemessen werden kann.

Die Schwenkachsen 37, 38 sind dazu jeweils über Kupplungen, vorzugsweise Membrankupplungen, mit Drehgebern 59 verbunden, wodurch für jedes Winkeltastelement 6, 7, hier in Form der Auflagen 45, 46, eine getrennte Erfassung des Achswinkels relativ zum Gestell 39 erfolgen kann. Der Winkel 13 zwischen den Anlageflächen 8, 9 wird aus der Kombination der Achswinkel errechnet. Die den Achswinkeln entsprechenden Messwerte der Drehgeber 59 können dabei durch eine Recheneinheit der Messvorrichtung 1 kombiniert werden und angezeigt oder optional über eine Schnittstelle an eine weitere Steuerung, beispielsweise der Abkantpresse, übergeben werden.
Die Winkeltastelemente 6, 7, insbesondere in flächiger Ausführung als Auflagen 45, 46 können weiters mit Fixiermitteln versehen sein, mit denen eine Kontaktkraft zwischen den Biegeschenkeln 4, 5 und den Auflagen 45, 46 erhöht wird und dadurch eine leichte Fixierung des Werkstücks 2 an der Messvorrichtung 1 erfolgt, wodurch während der Messung keine störenden Relativverschiebungen auftreten können.

Auch bei dieser Ausführungsform kann es von Vorteil sein, wenn Relativmesssysteme zum Einsatz kommen und die Referenzpunkte vor Beginn der Messung durch Vermessen eines Referenzwerkstücks gesetzt werden. Etwaige Ungenauigkeiten bei der Teilefertigung oder dem Zusammenbau der Messvorrichtung 1 können dadurch ausgeglichen werden. Selbstverständlich können auch Absolutmesssysteme zum Einsatz kommen, wobei manche Längenmessgeräte bereits für beide Betriebsarten geeignet sind.

Die Messvorrichtung 1 kann zusätzlich eine nicht dargestellte Dickenmesseinrichtung umfassen, die einem der Winkeltastelemente 6, 7 zugeordnet ist, um im Zuge einer Messung der Biegeschenkellängen 14, 18 auch die Dicke des Materials zu messen. Da diese auch Einfluss auf das Umformverhalten von Werkstücken 2 hat, kann auch dadurch der Aufwand für Versuchsdurchführungen verringert werden.

Die Ausführungsbeispiele zeigen mögliche Ausführungsvarianten der Messvorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es kann demnach auch für sämtliche denkbaren Ausführungsvarianten, die durch Kombinationen einzelner Details der dargestellten und beschriebenen Ausführungsvariante möglich sind, durch Tätigung gesonderter Anmeldungen ein Schutzanspruch gestellt werden.

Der Ordnung halber sei abschließend darauf hingewiesen, dass zum besseren Verständnis des Aufbaus der Messvorrichtung 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

## Patentansprüche

1. Messvorrichtung (1) zum Vermessen von an einer Abkantpresse gebogenen Werkstücken (2), umfassend zwei Winkeltastelemente (6, 7), die mittels einer Schwenkanordnung (12) in ihrer Winkelstellung relativ zueinander verschwenkbar gelagert sind und ebene Anlageflächen (9, 10) aufweisen, die an einem Werkstück (2) in Kontakt mit den Außenseiten (10) von zwei an eine Biegekante (3) anschließenden Biegeschenkeln (4, 5) bringbar sind, wobei die zwei Winkeltastelemente (6, 7) mit zwei Längenmessvorrichtungen (15, 19) mit parallel zu den Anlageflächen (8, 9) verstellbaren Längentastelementen (16, 20) verbunden sind, die in Kontakt mit den Enden (17, 21) der Biegeschenkel (4, 5) bringbar sind und dadurch die Längen (14, 18) beider Biegeschenkel (4, 5) eines mit den Anlageflächen (8, 9) angetasteten Werkstücks (2) gleichzeitig erfassbar sind, **dadurch gekennzeichnet, dass** in Gebrauchslage der Messvorrichtung (1) die zwei Winkeltastelemente (6, 7) mit nach oben weisenden Anlageflächen (8, 9) an zwei voneinander in horizontaler Richtung distanzierten und horizontal verlaufenden Schwenkachsen (37, 38) an einem gemeinsamen Gestell (39) schwenkbar angeordnet sind.

2. Messvorrichtung (1) nach Anspruch 1 **dadurch gekennzeichnet, dass** die Winkeltastelemente (6, 7) mit einer Winkelmesseinrichtung (24) verbunden sind und mit dieser der Winkel (13) zwischen den Anlageflächen (8, 9) direkt oder indirekt erfassbar ist.

3. Messvorrichtung (1) nach Anspruch 2, **dadurch gekennzeichnet, dass** die zwei Winkeltastelemente (6, 7) oder die Schwenkachsen (37, 38) mit Drehgebern (59) verbunden sind, mit denen die Winkelstellung der Winkeltastelemente (6, 7) relativ zum Gestell (39) erfassbar ist und die Drehgeber (59) Bestandteil der Winkelmesseinrichtung (24) zur Messung des Winkels (13) zwischen den Anlageflächen (8, 9) sind.

4. Messvorrichtung (1) nach einem der vorhergehenden Ansprüche, **dadurch gekennzeichnet, dass** zumindest eine Schwenkachse (37) relativ zum Gestell (39) verstellbar ist und dadurch der Achsabstand (40) zur anderen Schwenkachse (38) veränderbar ist.

5. Messvorrichtung (1) nach einem der vorhergehenden Ansprüche , **dadurch gekennzeichnet, dass** die Winkeltastelemente (6, 7) etwa rechteckige Anlageflächen (8, 9) aufweisen und in Bezug auf eine mittig zwischen den Schwenkachsen (37, 38) liegende vertikale Bezugsebene (51) symmetrisch angeordnet sind.

6. Messvorrichtung (1) nach Anspruch 5, **dadurch gekennzeichnet, dass** die Schwenkachse (37, 38) eines Winkeltastelements (6, 7) in dem zur Bezugsebene (51) benachbarten ersten Viertel ihrer Auflagelänge (48) angeordnet ist und mittels eines Ausgleichsgewichts (53) der Schwerpunkt der Kombination aus Winkeltastelement (6, 7) und Ausgleichsgewicht (53) im Nahbereich der Schwenkachse (37, 38) positioniert ist.

7. Messvorrichtung (1) nach einem der vorhergehenden Ansprüche, **dadurch gekennzeichnet, dass** die Breite (47) der Anlageflächen (8, 9) parallel zu den Schwenkachsen (37, 38) zumindest 60 mm, vorzugsweise mehr als 80 mm, beträgt.

8. Messvorrichtung (1) nach einem der vorhergehenden Ansprüche, **dadurch gekennzeichnet, dass** an den Winkeltastelementen (6, 7) Längenmessvorrichtungen (15, 19) mit die Längentastelemente (16, 20) aufweisenden, insbesondere pneumatisch betätigten, Längenmesstastern (54, 55) angeordnet sind.

9. Messvorrichtung (1) nach einem der vorhergehenden Ansprüche, **dadurch gekennzeichnet, dass** das Schwenklager (27) bzw. die Schwenkachsen (37, 38) bewegungsgedämpft ausgeführt ist bzw. sind.

10. Messvorrichtung (1) nach einem der vorhergehenden Ansprüche, **dadurch gekennzeichnet, dass** Nullpunkte oder Referenzpunkte der Längenmessvorrichtungen (15, 19) und der gegebenenfalls vorhandenen Winkelmessvorrichtung (24) mechanisch oder elektronisch in Messrichtung verstellbar oder veränderbar sind.

11. Messvorrichtung (1) nach einem der vorhergehenden Ansprüche, **dadurch gekennzeichnet, dass** den Längenmessvorrichtungen (15, 19) und/oder der Winkelmesseinrichtung (24) eine speicherprogrammierbare Recheneinheit (22) mit einer Programmlogik zur Berechnung eines Längenausgleichsfaktors der Umformung aus vor der Umformung gemessener Ausgangslänge eines Werkstückes (2) und nach der Umformung gemessenen Biegeschenkellängen (14, 18) zugeordnet ist.

12. Messvorrichtung (1) nach einem der vorhergehenden Ansprüche, **dadurch gekennzeichnet, dass** die Längenmessvorrichtungen (15, 19) und/oder die Winkelmesseinrichtung (24) eine Schnittstelle (23) für kabelgebundene oder drahtlose Übertragung von Messwerten der Biegeschenkellängen (14, 18) und/oder des Winkels (13) aufweist.

13. Messvorrichtung (1) nach einem der Ansprüche 2 bis 12, **dadurch gekennzeichnet, dass** der Messbereich für den Winkel (13) zwischen den Anlageflächen (8, 9) zumindest 180° beträgt.

14. Messvorrichtung (1) nach einem der vorhergehenden Ansprüche, **dadurch gekennzeichnet, dass** zumindest einem Winkeltastelement (6, 7) eine Dickenmesseinrichtung zugeordnet ist.

## Claims

1. A measuring device (1) for measuring workpieces (2) bent on a press brake, comprising two angle probing elements (6, 7), which are mounted by means of a swivel assembly (12) so that they can pivot relative to each other with respect to their angular position, and have flat bearing surfaces (9, 10), which on a workpiece (2) can be brought into contact with the exterior sides (10) of two bending legs (4, 5) adjoining a bending edge (3), wherein the two angle probing elements (6, 7) are connected with two length measuring devices (15, 19) that have length probing elements (16, 20), which can be adjusted parallel to the bearing surfaces (8, 9) and brought into contact with the ends (17, 21) of the bending legs (4, 5), as a result of which the lengths (14, 18) of both bending legs (4, 5) of a workpiece (2) probed with the bearing surfaces (8, 9) can be determined simultaneously, **characterized in that**, with the measuring device (1) in the use position, the two angle probing elements (6, 7) with upwardly facing bearing surfaces (8, 9) are pivotably arranged on two swiveling axes (37, 38) on a shared frame (39), which are spaced apart from each other in a horizontal direction and run horizontally.

2. The measuring device (1) according to claim 1, **characterized in that** the angle probing elements (6, 7) are connected with an angle measuring device (24), which can be used to directly or indirectly determine the angle (13) between the bearing surfaces (8, 9).

3. The measuring device (1) according to claim 2, **characterized in that** the two angle probing elements (6, 7) or the swiveling axes (37, 38) are connected with rotary encoders (59), with which the angular position of the angle probing elements (6, 7) relative to the frame (39) can be determined, and the rotary encoders (59) are part of the angle measuring device (24) for measuring the angle (13) between the bearing surfaces (8, 9).

4. The measuring device (1) according to one of the preceding claims, **characterized in that** at least one swiveling axis (37) can be adjusted relative to the frame (39), as a result of which the center distance (40) from the other swiveling axis (38) can be varied.

5. The measuring device (1) according to one of the preceding claims, **characterized in that** the angle probing elements (6, 7) have roughly rectangular bearing surfaces (8, 9), and are symmetrically arranged in relation to a vertical reference plane (51) lying centrally between the swiveling axes (37, 38).

6. The measuring device (1) according to claim 5, **characterized in that** the swiveling axis (37, 38) of an angle probing element (6, 7) is arranged in the first fourth of its bearing length (48) adjacent to the reference plane (51), and that the center of gravity comprised of the combination of angle probing element (6, 7) and counterweight (53) is positioned in proximity to the swiveling axis (37, 38) by a counterweight (53).

7. The measuring device (1) according to one of the preceding claims, **characterized in that** the width (47) of the bearing surfaces (8, 9) parallel to the swiveling axes (37, 38) measures at least 60 mm, preferably more than 80 mm.

8. The measuring device (1) according to one of the preceding claims, **characterized in that** length measuring devices (15, 19) with in particular pneumatically actuated length measuring probes (54, 55) exhibiting the length probing elements (16, 20) are arranged on the angle probing elements (6, 7).

9. The measuring device (1) according to one of the preceding claims, **characterized in that** the swiveling bearing (27) or the swiveling axes (37, 38) have a motion-dampened design.

10. The measuring device (1) according to one of the preceding claims, **characterized in that** zero points or reference points of the length measuring devices (15, 19) and potentially present angle measuring device (24) can be mechanically or electronically adjusted or varied in the measuring direction.

11. The measuring device (1) according to one of the preceding claims, **characterized in that** the length measuring devices (15, 19) and/or angle measuring device (24) have allocated to them a memory-programmable computing unit (22) with a program logic for calculating a length compensation factor for the transformation from the initial length of a workpiece (2) measured before the transformation and bending leg lengths (14, 18) measured after the transformation.

12. The measuring device (1) according to one of the preceding claims, **characterized in that** the length measuring devices (15, 19) and/or angle measuring device (24) have an interface (23) for the wired or wireless transmission of measuring values for the bending leg lengths (14, 18) and/or angle (13).

13. The measuring device (1) according to one of claims 2 to 12, **characterized in that** the measuring range for the angle (13) between the bearing surfaces (8, 9) measures at least 180°.

14. The measuring device (1) according to one of the preceding claims, **characterized in that** a thickness measuring device is allocated to at least one angle probing element (6, 7).

## Revendications

1. Dispositif de mesure (1) pour la mesure de pièces (2) pliées dans une presse plieuse, comprenant deux éléments de balayage angulaires (6, 7), qui sont logés de manière pivotante l'un par rapport à l'autre en ce qui concerne leur position angulaire au moyen d'un dispositif de pivotement (12) et comprennent des surfaces d'appui (9, 10), qui peuvent être amenés, au niveau d'une pièce (2), en contact avec les côtés extérieurs (10) de deux branches de pliage (4, 5) se raccordant au niveau d'une arête de pliage (3), les deux éléments de balayage angulaires (6, 7) étant reliés avec deux dispositifs de mesure de longueur (15, 19), avec des éléments de balayage longitudinaux (16, 20) réglables parallèlement aux surfaces d'appui (8, 9), qui peuvent être mis en contact avec les extrémités (17, 21) des branches de pliage (4, 5) et les longueurs (14, 18) des deux branches de pliage (4, 5) d'une pièce (2) balayées avec les surfaces d'appui (8, 9) pouvant ainsi être mesurées simultanément, **caractérisé en ce que**, dans la position d'utilisation du dispositif de mesure (1), les deux éléments de balayage angulaires (6, 7) avec des surfaces d'appui (8, 9) orientées vers le haut, sont disposés de manière pivotante au niveau de deux axes de pivotement (37, 38) s'étendant à une certaine distance entre eux dans la direction horizontale ou de manière horizontale sur un châssis commun (39).

2. Dispositif de mesure (1) selon la revendication 1, **caractérisé en ce que** les éléments de balayage angulaires (6, 7) sont reliés avec un dispositif de mesure d'angle (24) et ceux-ci permettant de mesurer l'angle (13) entre les surfaces d'appui (8, 9) de manière directe ou indirecte.

3. Dispositif de mesure (1) selon la revendication 2, **caractérisé en ce que** les deux éléments de balayage angulaires (6, 7) ou les axes de pivotement (37, 38) sont reliés avec des capteurs de rotation (59) permettant de mesurer la position angulaire des éléments de balayage angulaires (6, 7) par rapport au châssis (39) et les capteurs de rotation (59) font partie du dispositif de mesure d'angle (24) pour la mesure de l'angle (13) entre les surfaces d'appui (8, 9).

4. Dispositif de mesure (1) selon l'une des revendications précédentes, **caractérisé en ce qu'**au moins un axe de pivotement (37) est réglable par rapport au châssis (39) et l'entraxe (40) par rapport à l'autre axe de pivotement (38) peut ainsi être modifié.

5. Dispositif de mesure (1) selon l'une des revendications précédentes, **caractérisé en ce que** les éléments de balayage angulaires (6, 7) comprennent des surfaces d'appui (8, 9) approximativement rectangulaires en sont disposés de manière symétrique par rapport à un plan de référence vertical (51) vertical se trouvant entre les axes de pivotement (37, 38).

6. Dispositif de mesure (1) selon la revendication 5, **caractérisé en ce que** l'axe de pivotement (37, 38) d'un élément de balayage angulaire (6, 7) est disposé dans le premier quart de sa longueur de pose (48) adjacent au plan de référence (51) et un poids d'équilibrage (53) permet de positionner le centre de gravité de la combinaison constituée de l'élément de balayage angulaire (6, 7) et du poids d'équilibrage (53) à proximité de l'axe de pivotement (37, 38).

7. Dispositif de mesure (1) selon l'une des revendications précédentes, **caractérisé en ce que** la largeur (47) des surfaces d'appui (8, 9) est, parallèlement aux axes de pivotement (37, 38), d'au moins 60 mm, de préférence de plus de 80 mm.

8. Dispositif de mesure (1) selon l'une des revendications précédentes, **caractérisé en ce que**, sur les éléments de balayage angulaires (6, 7) sont disposés des dispositifs de mesure de longueur (15, 19) avec les capteurs de mesure de longueur (54, 55) comprenant les éléments de balayage longitudinaux (16, 20), plus particulièrement actionnés pneumatiquement.

9. Dispositif de mesure (1) selon l'une des revendications précédentes, **caractérisé en ce que** le palier de pivotement (27) ou les axes de pivotement (37, 38) est/sont conçu(s) avec un mouvement amorti.

10. Dispositif de mesure (1) selon l'une des revendications précédentes, **caractérisé en ce que** les points zéro ou les points de référence des dispositifs de mesure de longueur (15, 19) et du dispositif de mesure d'angle (24) éventuellement présent, sont réglables ou modifiables de manière mécanique ou électronique dans la direction de mesure.

11. Dispositif de mesure (1) selon l'une des revendications précédentes, **caractérisé en ce qu'**aux dispositifs de mesure de longueur (15, 19) et/ou au dispositif de mesure d'angle (24) correspond une unité informatique à mémoire programmable (22) avec une logique de programmation pour le calcul d'un facteur de compensation de longueur du formage à partir d'une longueur de départ d'une pièce (2) mesurée avant le formage et de longueurs de branches de pliage (14, 18) mesurées après le formage.

12. Dispositif de mesure (1) selon l'une des revendications précédentes, **caractérisé en ce que** les dispositifs de mesure de longueur (15, 19) et/ou le dispositif de mesure d'angle (24) comprend une interface (23) pour une transmission filaire ou sans fil de valeurs de mesure des longueurs de branches de pliage (14, 18) et/ou de l'angle (13).

13. Dispositif de mesure (1) selon l'une des revendications 2 à 12, **caractérisé en ce que** la plage de mesure pour l'angle (13) entre les surfaces d'appui (8, 9) est d'au moins 180°.

14. Dispositif de mesure (1) selon l'une des revendications précédentes, **caractérisé en ce qu'**à au moins un élément de balayage angulaire (6, 7) correspond un dispositif de mesure d'épaisseur.
